Europäisches Patentamt

European Patent Office

Office européen des brevets

(11) Veröffentlichungsnummer: **0 090 965
B1**

(12) # EUROPÄISCHE PATENTSCHRIFT

(45) Veröffentlichungstag der Patentschrift:
**15.07.87**

(51) Int. Cl.⁴: **G 01 C 21/22,** G 09 B 29/10

(21) Anmeldenummer: **83102564.8**

(22) Anmeldetag: **15.03.83**

(54) **Verfahren zur Koordinateneingabe bei einem automatischen Leitsystem für Fahrzeuge.**

(30) Priorität: **05.04.82 DE 3212641**

(43) Veröffentlichungstag der Anmeldung:
**12.10.83 Patentblatt 83/41**

(45) Bekanntmachung des Hinweises auf die Patenterteilung:
**15.07.87 Patentblatt 87/29**

(84) Benannte Vertragsstaaten:
**FR GB IT SE**

(56) Entgegenhaltungen:
**EP - A - 0 027 232
DE - A - 1 423 094
FR - A - 493 836
FR - A - 772 895
FR - A - 1 003 051
FR - A - 2 381 358
GB - A - 2 077 975
US - A - 4 312 577**

(73) Patentinhaber: **Siemens Aktiengesellschaft Berlin und München, Wittelsbacherplatz 2, D-8000 München 2 (DE)**

(72) Erfinder: **Heuwieser, Erwin, Dipl.-Ing.,
Ludwig-Thoma-Strasse 57, D-8013 Haar (DE)**
Erfinder: **Müller, Rüdiger, Dr. Ing., Putzbrunner Strasse 131, D-8000 München 83 (DE)**

# Beschreibung

Die Erfindung betrifft ein Verfahren zur Eingabe der Koordinaten des Start- und Zielortes bei einem mit Koppelnavigation arbeitenden, die Fahrposition automatisch errechnenden Leitsystem.

Derartige automatische Leitsysteme sind für Land-, Wasser- sowie Luftfahrzeuge verwendbar. Diese Systeme arbeiten nach dem Prinzip der Koppelnavigation, wobei eine im Fahrzeug angeordnete Magnetfeldsonde Richtungsänderungen in bezug auf das Erdmagnetfeld registriert. Mittels eines geeigneten Wegstreckenmessers (in Landfahrzeugen beispielsweise ein Radsensor) lässt sich somit von einem bekannten Startpunkt aus durch laufende Messungen des zurückgelegten Weges und des Winkels die jeweilige Fahrzeugposition errechnen.

Zu Beginn einer Fahrt müssen vom Benutzer in geeigneter Weise codierte Koordinaten des Start- und Zielortes in das Gerät eingegeben werden. Diese können z. B. einer Land- bzw. Seekarte oder einem Stadtplan entnommen werden. Nach Eingabe der Koordinaten errechnet ein Rechenwerk die Luftlinienentfernung zum Zielort und gibt diese auf einem im Fahrzeug angeordneten Anzeigegerät, beispielsweise einem Display, wieder. Weiterhin ist auf dem Anzeigegerät beispielsweise ein Windrosensymbol angeordnet, dass die Richtung zum Zielort angibt.

Die Bestimmung der Koordinaten des Start- bzw. Zielortes ist nun mit gewissen Schwierigkeiten verbunden. Man kann hierfür z. B. in Planquadrate eingeteilte Karten verwenden, jedoch ist die Ungenauigkeit hierbei von der Grösse der Planquadrate abhängig und beträgt maximal a $\sqrt{2}$ (a = Seitenlänge eines Planquadrates). Die Grösse der Planquadrate ist bei den meisten Karten jedoch zu grob für eine exakte Zielführung (z. B. bei einem Stadtplan des Massstabes 1:33 000 ist die Seitenlänge 300 Meter, die maximale Ungenauigkeit also 300 $\sqrt{2} \approx$ 420 Meter). Es ist zwar möglich, die relativen Koordinaten durch Ausmessen, z. B. mit einem Lineal zu ermitteln, jedoch ist dieses Verfahren sehr umständlich, zeitaufwendig und für eine grosse Zahl von Benutzern nicht zumutbar.

Aus der GB-A-2 077 975 ist es bekannt, am Rand einer Karte in X-Y-Richtung eine Strichcodierung anzuordnen bzw. diese Strichcodierung am Rand und um einen Mittelpunkt drehbar in Polarkoordinatenform anzubringen und mit einem Codelesegerät abzulesen. Das in der Druckschrift beschriebene Verfahren dient dazu, bestimmte Parameter, wie Höhe, Tiefe, Druck, Temperatur, geologische Strukturen, mit Hilfe eines angeschlossenen Mikroprozessors zu identifizieren. Allerdings ist mit der dargestellten Randcodierung eine Zuordnung mit hinreichender Genauigkeit nicht gewährleistet, da der Benutzer abschätzen muss, welchem Koordinatenrandpunkt auf der X- bzw. Y-Achse der zu ermittelnde Ort entspricht. Hierdurch sind beliebige Fehlerquellen möglich. Ferner setzt die beschriebene Codierung in Polarkoordinatenform eine aufwendige Kartenherstellung voraus.

Aus der EP-A-0 027 232 ist eine autarke Navigationseinrichtung für Strassenfahrzeuge bekannt, die nach dem Prinzip der Koppelnavigation arbeitet. Bei dieser Einrichtung ist es allerdings erforderlich, die Koordinaten des Start- und Zielortes manuell einzutasten, wodurch Fehlermöglichkeiten nicht ausgeschlossen sind.

Aus der US-A-4 312 577 ist es bekannt, für Automobile eine Strassenkarte durch projizierte Dia-Positive zu ersetzen, die in einem Randbereich eine Codierung in Form einer Code-Flächenpunkt-Verteilung besitzen. Diese Codierung dient dazu, bestimmte Orte auf der Landkarte schnell aufzufinden und eignet sich nicht für die Koordinateneingabe des Start- und Zielortes bei einem mit Koppelnavigation arbeitenden, die Fahrposition automatisch errechnenden Leitsystem.

Aufgabe der Erfindung ist es, ein Verfahren zur Koordinateneingabe anzugeben, bei der in einfacher und sicherer Weise die Koordinaten des Start- und Zielortes mit ausreichender Genauigkeit in das System eingegeben werden können.

Diese Aufgabe wird erfindungsgemäss gelöst mit einem Verfahren zur Eingabe der Koordinaten des Start- und Zielortes bei einem mit Koppelnavigation arbeitenden, die Fahrposition automatisch errechnenden Leitsystem für Land-, Wasser- und Luftfahrzeuge unter Verwendung einer Landkarte, Seekarte oder eines Stadtplanes mit mindestens einer Strichcodierung und einem optischen oder magnetischen Codelesegerät, indem das Codelesegerät auf der Karte über den Start- und Zielort geführt wird.

Der Vorteil der Erfindung besteht darin, dass die Koordinaten in einfacher Weise in das Leitsystem eingegeben werden können, ohne dass die Gefahr besteht, dass dem Benutzer bei der Koordinateneingabe Fehler unterlaufen.

Zur Eingabe wird das Lesegerät nur über die mit der Strichcodierung versehene Karte bzw. transparente Folie in der Richtung vom Start- zum Zielort geführt. Bei Vorlagen, die in Planquadrate unterteilt sind, genügt es, zuerst das Planquadrat mit dem Start- und dann das Planquadrat mit dem Zielort zu überstreichen.

Die Erfindung wird nun anhand der folgenden Ausführungsbeispiele näher erläutert. In der dazugehörenden Zeichnung zeigen

Fig. 1 das Beispiel eines richtungseindeutigen Rasters und

Fig. 2 ein Beispiel für ein Planquadratverfahren.

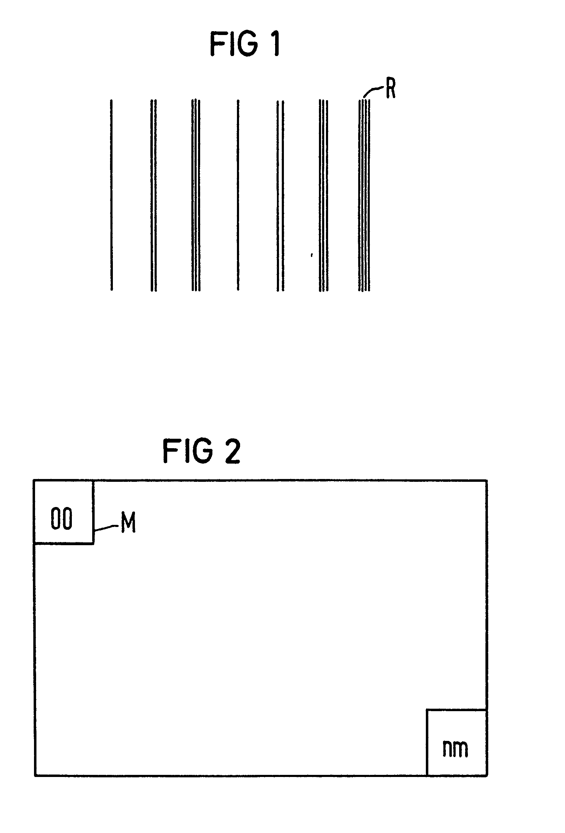

In der Fig. 1 ist ein Beispiel für ein optisch oder magnetisch lesbares Raster dargestellt, dass beispielsweise auf einer Landkarte angeordnet ist. Das dargestellte Raster erlaubt die Erkennung der Richtung (von links nach rechts oder umgekehrt) und besitzt eine Identifikation des Randes R. Auf der Karte ist vorzugsweise senkrecht zu dem in der Fig. 1 dargestellten Raster ein zweites unterscheidbares Raster angeordnet (z. B. Farbe, Codierung). Aus den mittels des Lesegerätes in das Leitsystem eingegebenen Koordinaten werden Start/Ziel-Entfernung und Richtung errechnet. X- und Y-Richtungen können parallel (gleichzeitig) oder seriell (hintereinander) in das Gerät eingelesen werden.

Das Raster kann auf die Karte aufgebracht sein oder in Form durchsichtiger Folien auf die Karte aufgelegt werden. Die zweite Ausführungsform hat den Vorteil, dass jede beliebige Karte verwendet werden kann. In diesem Fall ist es allerdings erforderlich, dass am Gerät selbst eine Vorrichtung vorhanden ist, mit der der Massstab der verwendeten Karte in das Gerät eingegeben werden kann. Bei direkt auf Karten angeordneten Rastern kann die Massstabsinformation bereits im Raster codiert sein oder an einer getrennten Stelle (z.B. am Kartenrand) getrennt gelesen werden.

Weiterhin kann am Kartenrand eine Gebrauchsanweisung bzw. ein Einlesevorgang angebracht sein.

In der Fig. 2 ist ein Beispiel dargestellt, bei der eine in Planquadrate 00 bis nm unterteilte Karte bzw. Folie vorliegt. Bei den einzelnen Planquadraten kann eine Randmarkierung M angeordnet sein, in der eine Kennziffer codiert ist (gegebenenfalls auch getrennt einlesbar). Dies ermöglicht die Verwendung von gefalteten Plänen.

Bei einem inkrementalen Raster muss ein Planquadrat über die Eckpunkte verlassen werden. Bei entsprechender Codierung des Rasters ist auch eine Absolutinformation möglich. Hierbei genügt im Grenzfall das Einlesen einer Kennziffer. Entsprechend können auch besondere Punkte der Karte gekennzeichnet werden (Sehenswürdigkeiten, öffentliche Gebäude usw.

## Patentanspruch

1. Verfahren zur Eingabe der Koordinaten des Start- und Zielortes bei einem mit Koppelnavigation arbeitenden, die Fahrposition automatisch errechnenden Leitsystem für Land-, Wasser- und Luftfahrzeuge unter Verwendung einer Landkarte, Seekarte oder eines Stadtplanes mit mindestens einer Strichcodierung und einem optischen oder magnetischen Codelesegerät, indem das Codelesegerät auf der Karte über den Start- und Zielort geführt wird.

## Claim

1. A method of entering the co-ordinates of the start location and target location into a dead reckoning navigation system for land-, water- and airborne vehicles, which automatically calculates the vehicle position, with an optical or magnetic code reader, using a map, a chart or a town plan having at least one bar code where the code reader is passed over the start location and the target location on the map.

## Revendication

1. Procédé pour introduire des coordonnées du lieu de départ et du lieu de destination dans un système de conduite, fonctionnant par navigation à l'estime et calculant de façon automatique la position en déplacement, pour des véhicules terrestres, marins et aériens, moyennant l'utilisation d'une carte terrestre, d'une carte marine ou d'un plan d'une ville comportant au moins un codage formé de barres et un appareil de lecture optique ou magnétique de code, l'appareil de lecture de code étant guidé sur la carte au-dessus du lieu de départ et du lieu de destination.

# FIG 1

# FIG 2